# EUROPÄISCHE PATENTSCHRIFT

(11) **EP 1 088 856 B1**
(45) Veröffentlichungstag und Bekanntmachung des Hinweises auf die Patenterteilung: **22.10.2003**
(21) Anmeldenummer: 99119576.9
(22) Anmeldetag: 02.10.1999
(51) Int. Cl.: C08L 29/04, C08L 89/06, C09D 129/04, C09D 189/06, B41M 5/00, B32B 27/28

(54) **Verfahren zur Herstellung von Beschichtungen, insbesondere für den Tintenstrahldruck**
Processes for the production of coatings, especially for inkjet printing
Procédés de formation de revêtements, notamment pour l'impression par jet d'encre

(43) Veröffentlichungstag der Anmeldung: 04.04.2001
(73) Patentinhaber: Typon Graphic Systems AG, 3400 Burgdorf (CH)
(72) Erfinder: Zwicky, Hans, 3423 Ersigen (CH)
(74) Vertreter: Blum, Rudolf Emil Ernst

(56) Entgegenhaltungen:
- EP-A- 0 830 952
- US-A- 5 214 023
- DATABASE WPI Section Ch, Week 198313 Derwent Publications Ltd., London, GB; Class A14, AN 1983-30920K XP002133575 & JP 58 028737 A (KONISHIROKU PHOTO IND CO LTD), 19. Februar 1983 (1983-02-19)

## Beschreibung

Die vorliegende Erfindung betrifft Beschichtungen auf der Grundlage von Polyvinylalkohol und Gelatine, die insbesondere zur Beschichtung von Spezialpapier für den Tintenstrahldruck geeignet ist, aber auch andere Anwendungen hat.

Sowohl Gelatine wie Polyvinylalkohol werden technisch in grossem Masse für vielerlei Beschichtungen verwendet und haben, entsprechend ihrer chemischen Struktur, unterschiedliche Eigenschaften.

Für alle Anwendungen sind Beschichtungen wünschenswert, welche die Eigenschaftsspektren beider Materialien besitzen.

Bekanntlich lässt sich aber Polyvinylalkohol nur schwer mit anderen hochmolekularen Stoffen vermischen, ohne dass beim Trocknen eine Phasentrennung eintritt, wie z.B. ein aktueller Prospekt der Fa. Clariant (z.B. Juli 98), einer führenden Anbieterin von Polyvinylalkoholen, zeigt.

Die vorliegende Erfindung betrifft eine Polymerzusammensetzung sowie ein Verfahren zu deren Herstellung, wobei der Polyvinylalkohol so modifiziert ist resp. wird, dass er seine physikalischen Eigenschaften im wesentlichen beibehält, und dass er zusammen mit Gelatine vollkommen klare Lösungen und Schichten bildet. Solche Schichten zeichnen sich üblicherweise dadurch aus, dass sie besonders glatte und hochglänzende Oberflächen besitzen.

Erfindungsgemäss wird der Polyvinylalkohol für die erfindungsgemässe Polymerzusammensetzung in einem relativ niedrigen Molverhältnis mit sauren und/oder basischen Aldehyden acetalisiert. Offenbar wird so die chemische Charakteristik des Polyvinylalkohols derjenigen der Gelatine angeglichen, wodurch beim Trocknen keine Phasentrennung eintritt. Durch dieses Verfahren können auch nicht oder mindestens nur schwer auswaschbare Ladungsträger in die Schicht eingeführt werden. Damit kann die Zusammensetzung auf unterschiedliche Anwendungszwecke abgestimmt resp. optimiert werden.

Ganz besonders nützlich und vorteilhaft erweisen sich solche Schichten für den Tintenstrahldruck, da die aufgedruckten Farbstofftröpfchen sehr schnell von der erfindungsgemässen Schicht aufgenommen werden und damit von der Schichtoberfläche verschwinden. Dadurch wird ein sehr gut aufgelöstes, klares und beständiges Bild erhalten. Ein weiterer Vorteil erfindungsgemässer Schichten ist deren Beschriftbarkeit mit beliebigen Faserschreibern etc.

Geeignete Aldehyde für die Herstellung erfindungsgemäss geeigneter Polyvinylalkohole sind grundsätzlich saure Gruppen tragende Aldehyde. Saure Gruppen können z.B. Sulfonsäure- oder Carbonsäuregruppen resp. deren Salze sein, beispielsweise Sulfobenzaldehyde, insbesondere o-Sulfobenzaldehyd und 2,4-Disulfobenzaldehyd. Für die Einführung basischer Gruppen dienen mit basischen Gruppen substituierte Aldehyde, z.B. Quarternärsalze von Aminogruppen tragenden Aldehyden, wie Aminobenzaldehyde, insbesondere Dimethylaminobenzaldehyde, oder aber auch Quarternärsalze der Pyridinaldehyde. Im weiteren sind die Quarternärgruppen variierbar, indem bekannte Quarternierungsmittel wie z.B. Butansulton oder Halogencarbonsäuren für die Quarternierung der Basen verwendet werden können. Allerdings darf der Anteil an basischen Gruppen nicht beliebig hoch sein, weil sonst beim Trocknen bereits wieder eine Phasentrennung eintritt. Das Verhältnis von sauren zu basischen Gruppen ist recht weit variierbar. Eine ausschliessliche Verwendung von basischen Aldehyden führt aber beim Trocknen zu einer Phasentrennung, während dies bei Mischacetalen mit sowohl sauren als auch basischen Gruppen viel weniger oder gar nicht der Fall ist. Selbstverständlich sind im Rahmen dieser Erfindung auch Acetale aus mehr als einem sauren resp. mehr als einem basischen Aldehyd mitumfasst.

Die Acetalisierung erfolgt geeigneterweise ausgehend von Polyvinylalkohol mit dem entsprechenden Aldehyd in saurer Lösung, üblicherweise bei einem pH-Wert unter 2.5, insbesondere um 2. Als Säuren dienen meist Phosphorsäure, Schwefelsäure oder auch Toluolsulfonsäure. Der an den Polyvinylalkohol angebundene, aus dem Aldehyd stammende Rest wird in der Folge Acetalgruppe genannt.

Nach erfolgter Acetalisierung wird die wässrige Lösung mit einer geeigneten Base, z.B. Natronlauge, auf üblicherweise einen pH von mindestens 4 neutralisiert, meistens auf pH ca. 5. Die neutralisierte, wässrige Lösung kann so gelagert oder direkt mit einer wässrigen Gelatinelösung vermischt werden. Die dabei erhaltene erfindungsgemässe Zusammensetzung kann entweder gelagert oder direkt auf einen Schichtträger vergossen werden.

Bei den Polyvinylalkoholen steht ein breites Spektrum an Möglichkeiten zur Verfügung. Je nach Wunsch können hoch- oder niedrigviscose und mehr oder weniger verseifte Typen zum Einsatz gelangen. Kritisch ist lediglich die Acetalisierung, die 5-20 % der Summe aller acetalisierten und nicht acetalisierten OH-Gruppen ausmachen sollte. Geeignete Polyvinylalkohole umfassen z.B. alle im Katalog "Moviole" (Juli 98) der Fa. Clariant, Basel, Schweiz beschriebenen Polyvinylalkohole.

Auch die Wahl der Gelatine ist nicht kritisch, wobei - je nach Anwendung - auch modifizierte Gelatinen mitverwendet werden können. Für eine solche Modifizierung geeignete Reagenzien sind dem Fachmann bekannt und sind z.B. Säureanhydride, insbesondere cyclische Anhydride, sowie Isocyanate, üblicherweise mono-Isocyanate.

Das Verhältnis Polyvinylalkohol : Gelatine ist in sehr weiten Grenzen variierbar, wobei üblicherweise im Gewichtsverhältnis 20:80 bis 80:20 gearbeitet wird, um von den Eigenschaften beider Stoffe zu profitieren.

Neben dem acetalisierten Polyvinylalkohol und der gegebenenfalls modifizieren Gelatine enthalten die erfindungsgemässen Zusammensetzungen ein Lösungsmittel, normalerweise Wasser, wobei für spezielle Anwendungen eine geringe Menge eines oder mehrerer wasserlöslicher Lösungsmittel zugemischt werden können.

Die Menge Lösungsmittel, insbesondere Wasser, richtet sich nach der gewünschten Viskosität.

Ferner können die Zusammensetzungen bei Bedarf Härtungsmittel (Vernetzer) enthalten, wobei der Zusatz eines solchen für Papierbeschichtungen für Tintenstrahldruck nicht geeignet oder jedenfalls nicht bevorzugt ist. Daneben können übliche Füllstoffe, wie optische Aufheller, Mattierungsmittel etc. beigegeben werden.

Mit den erfindungsgemässen Polymerzusammensetzungen lassen sich viele verschiedene Substrate beschichten, wie z.B. Papiere und Karton aber auch Kunststoffe und jede andere Oberfläche, vorausgesetzt, dass ausreichende Haftung erzeugt werden kann. Um eine allenfalls mangelhafte Haftung zu verbessern können Haftvermittler eingesetzt werden, wobei sowohl Haftvermittler für die Haftungsverbesserung von Polyvinylalkoholen als auch Gelatine geeignet sind.

Neben der Erzeugung von glänzenden und/oder gut beschriftbaren Schichten können auch Antistatikbeschichtungen hergestellt werden.

Ferner kann z.B. durch mehr oder weniger hohe Anteile basischer Acetale die Schicht etwas matter gestaltet werden, wodurch ein seidiger Schimmer entsteht.

Entsprechende Schichten können mit verschiedensten Verfahren hergestellt werden. Für die Beschichtung von Papier sind aber normale fotografische Giessverfahren bevorzugt, da diese einfach sind und die erfindungsgemässen Zusammensetzungen - dank der Sol-Gel-Umwandlung der Gelatine - direkt nach der Applikation nicht mehr fliessfähig sind.

Im folgenden werden einige Beispiele aufgeführt:

### Beispiel 1

In 100 g einer 10 %igen wässrigen Polyvinylalkohollösüng werden 3 g Benzaldehyddisulfonsäure-Natrium-Salz gelöst und 4 ml einer 10 %igen wässrigen Lösung von Toluolsulfonsäure zugesetzt. Nach zweitägigem Stehen bei Raumtemperatur wird der pH-Wert der Lösung auf 5 eingestellt und 100 g einer 10 %igen Gelatinelösung zugesetzt.

Beim Vergiessen dieser Lösung auf eine weisse Polyesterfolie und anschliessendem Trocknen der Schicht entsteht eine ausserordentlich glänzende glatte Oberfläche, die mit einem Tintenstrahldrucker bedruckt, brillante Bilder mit guter Farbsättigung liefert.

### Beispiel 2

Es wird der gleiche Ansatz wie im Beispiel 1 verwendet, zur Acetalisierung jedoch noch 1 g Pyridinaldehyd-Methylquarternat-Toluolsulfonat zugefügt.

### Beispiel 3

Wie Beispiel 1. Anstelle von Benzaldehyddisulfonsäure werden 4 g o-Sulfobenzaldhyd eingesetzt.

### Beispiel 4

Man verwendet die Acetale von Beispiel 1 bis 4, setzt aber für den Guss noch eine variierbare Menge eines Acrylatlatex zu, welcher der Schicht etwas andere physikalische Eigenschaften verleiht. Die Zusammensetzung blieb homogen.

### Beispiel 5

Man verwendet die Acetale von Beispiel 1 bis 4, setzt aber vor dem Vergiessen noch eines der üblichen Gelatine- oder Polyvinylalkohol-Härtungsmittel zu. Dadurch wird die Saugfähigkeit etwas verringert, gleichzeitig aber die Wasserbeständigkeit erhöht.

### Beispiel 6

Man verwendet das Acetal von Beispiel 1, setzt aber vor dem Vergiessen noch eine verhältnismässig kleine Menge eines basischen Acetals zu. Dadurch entsteht beim Trocknen eine als Seidenglanz bezeichnete Schichtoberfläche.

### Beispiel 7

Für die Erzeugung matter Oberflächen wurden die bei fotografischen Schichten üblichen Mattierungsmittel Stärke, Kieselsäuren resp. Latexkügelchen zugesetzt. Die Schicht blieb homogen.

## Patentansprüche

1. Polymerzusammensetzung, **dadurch gekennzeichnet, dass** sie Polyvinylalkohol und Gelatine enthält, wobei der Polyvinylalkohol saure Acetalgruppen enthält.

2. Polymerzusammensetzung gemäss Anspruch 1, **dadurch gekennzeichnet, dass** der Polyvinylalkohol saure und basische Acetalgruppen enthält.

3. Polymerzusammensetzung gemäss Anspruch 1 oder 2, **dadurch gekennzeichnet, dass** 5 bis 20 % der Summe aller acetalisierten und nicht acetalisierten OH-Gruppen des Polyvinylalkohols acetalisiert sind.

4. Polymerzusammensetzung gemäss einem der Ansprüche 1 bis 3, **dadurch gekennzeichnet, dass** der Polyvinylalkohol ausschliesslich ionische Acetalgruppen enthält.

5. Polymerzusammensetzung gemäss einem der Ansprüche 1 bis 4, **dadurch gekennzeichnet, dass** die sauren Acetalgruppen saure Substituenten tragende Benzaldehydreste und die basischen Acetalgruppen Quarternärsalze substituierter Benzaldehydreste oder Quarternärsalze von Pyridinaldehydresten sind.

6. Polymerzusammensetzung gemäss Anspruch 5, **dadurch gekennzeichnet, dass** die saure Substituenten tagenden Benzaldehydreste ausgewählt sind aus der Gruppe umfassend Reste von Sulfonsäure- und/oder Carbonsäuregruppen tragenden Benzaldehyden, insbesondere o-Sulfobenzaldehyd und 2,4-Disulfobenzaldehyd, und dass die Quarternärsalze substituierter Benzaldehydreste ausgewählt sind aus der Gruppe umfassend Quarternärsalze von Aminobenzaldehydresten, wie Dimethylaminobenzaldehyden.

7. Polymerzusammensetzung gemäss einem der Ansprüche 1 bis 6, **dadurch gekennzeichnet, dass** die Gelatine unmodifizierte Gelatine ist.

8. Polymerzusammensetzung gemäss einem der Ansprüche 1 bis 7, **dadurch gekennzeichnet, dass** der Polyvinylalkohol und die Gelatine in einem Verhältnis von 20:80 bis 80:20 vorliegen.

9. Verfahren zur Herstellung einer Polymerzusammensetzung gemäss einem der Ansprüche 1 bis 7, **dadurch gekennzeichnet, dass** eine wässrige Lösung eines saure Acetalgruppen enthaltenden Polyvinylalkohols mit einer wässrigen Gelatinelösung vermischt wird.

10. Verfahren gemäss Anspruch 9, **dadurch gekennzeichnet, dass** die Lösung des saure Acetalgruppen enthaltenden Polyvinylalkohols hergestellt wird durch Acetalisierung von Polyvinylalkohol mit Aldehyd in saurer Lösung und anschliessender Neutralisierung.

11. Verwendung einer Polymerzusammensetzung gemäss einem der Ansprüche 1 bis 8 zur Beschichtung von Substraten, insbesondere von Papier für Tintenstrahldruck.

12. Beschichtung, **dadurch gekennzeichnet, dass** sie Polyvinylalkohol und Gelatine wie in einem der Ansprüche 1 bis 8 definiert enthält oder daraus besteht.

## Claims

1. A polymer composition, **characterised in that** it contains polyvinyl alcohol and gelatine, whereby the polyvinyl alcohol contains acidic acetal groups.

2. The polymer composition of claim 1, **characterised in that** the polyvinyl alcohol contains acidic and basic acetal groups.

3. The polymer composition of claim 1 or 2, **characterised in that** 5 to 20 % of the sum of all acetalised and not acetalised OH-groups of the polyvinyl alcohol are acetalised.

4. The polymer composition of anyone of claims 1 to 3, **characterised in that** the polyvinyl alcohol exclusively contains ionic acetal groups.

5. The polymer composition of anyone of claims 1 to 4, **characterised in that** the acidic acetal groups are benzaldehyde radicals carrying acidic substituents and that the basic acetal groups are quaternary salts of substituted benzaldehyde radicals or quaternary salts of pyridinealdehyde radicals.

6. The polymer composition of claim 5, **characterised in that** the benzaldehyde radicals carrying acidic substituents are selected from the group comprising benzaldehyde radicals carrying sulfonic acid groups and/or carboxylic acid groups, in particular o-sulfobenzaldehyde and 2,4-disulfobenzaldehyde, and that the quaternary salts of substituted benzaldehyde radicals are selected from the group comprising quaternary salts of aminobenzaldehyde radicals such as dimethylamino benzaldehydes.

7. The polymer composition of anyone of claims 1 to 6, **characterised in that** the gelatine is unmodified gelatine.

8. The polymer composition of anyone of claims 1 to 7, **characterised in that** the polyvinyl alcohol and the gelatine are present in a ratio of 20:80 to 80:20.

9. A method for the production of a polymer composition of anyone of claims 1 to 7, **characterised in that** an aqueous solution of an acidic acetal groups containing polyvinyl alcohol is mixed with an aqueous gelatine solution.

10. The method of claim 9, **characterised in that** the solution of the acidic acetal groups containing polyvinyl alcohol is produced by acetalisation of polyvinyl alcohol with aldehyde in acidic solution and then neutralisation.

11. Use of a polymer composition of anyone of claims 1 to 8 for coating substrates, in particular paper for ink-jet printing.

12. Coating, **characterised in that** it contains or consists of polyvinyl alcohol and gelatine as defined in one of claims 1 to 8.

## Revendications

1. Composition de polymère **caractérisée en ce qu'**elle contient de l'alcool polyvinylique et de la gélatine, l'alcool polyvinylique contenant des groupes acétal acides.

2. Composition de polymère suivant la revendication 1, **caractérisée en ce que** l'alcool polyvinylique contient des groupes acétal acides et basiques.

3. Composition de polymère suivant l'une des revendications 1 et 2, **caractérisée en ce que** 5 à 20 % de la somme de tous les groupes OH acétalisés et non acétalisés de l'alcool polyvinylique sont acétalisés.

4. Composition de polymère suivant l'une des revendications 1 à 3, **caractérisée en ce que** l'alcool polyvinylique contient exclusivement des groupes acétal ioniques.

5. Composition de polymère suivant l'une des revendications 1 à 4, **caractérisé en ce que** les groupes acétal acides sont des radicaux benzaldéhyde portant des substituants acides et **en ce que** les groupes acétal basiques sont des sels quaternaires de radicaux benzaldéhyde substitués ou des sels quaternaires de radicaux pyridinaldéhyde.

6. Composition de polymère suivant la revendication 5, **caractérisée en ce que** les radicaux benzaldéhyde portant des substituants acides sont choisis parmi le groupe comprenant des radicaux de benzaldéhydes portant des groupes acide sulfonique et/ou acide carboxylique, en particulier du o-sulfobenzaldéhyde et du 2,4-disulfobenzaldéhyde, et **en ce que** les sels quaternaires de radicaux benzaldéhyde substitués sont choisis parmi le groupe comprenant des sels quaternaires de radicaux aminobenzaldéhydes, comme des diméthylaminobenzaldéhydes.

7. Composition de polymère suivant l'une des revendications 1 à 6, **caractérisée en ce que** la gélatine est une gélatine non modifiée.

8. Composition de polymère suivant l'une des revendications 1 à 7, **caractérisée en ce que** l'alcool polyvinylique et la gélatine se présentent dans un rapport de 20/80 à 80/20.

9. Procédé de préparation d'une composition de polymère suivant l'une des revendications 1 à 7, **caractérisé en ce qu'**à une solution aqueuse d'un alcool polyvinylique contenant des groupes acétal acides on mélange une solution aqueuse de gélatine.

10. Procédé suivant la revendication 9, **caractérisé en ce que** la solution de l'alcool polyvinylique contenant des groupes acétal acides est préparée par acétalisation d'alcool polyvinylique avec de l'aldéhyde en solution acide et ensuite neutralisation.

11. Utilisation d'une composition de polymère suivant l'une des revendications 1 à 8, pour le revêtement de substrats, en particulier de papier pour l'impression par jet d'encre.

12. Revêtement, **caractérisé en ce qu'**il contient de l'alcool polyvinylique et de la gélatine, comme défini dans une des revendications 1 à 8, ou est constitué de ceux-ci.
